# EUROPEAN PATENT SPECIFICATION

(11) **EP 3 353 093 B1**
(45) Date of publication and mention of the grant of the patent: **11.09.2019**
(21) Application number: 16766990.2
(22) Date of filing: 20.09.2016
(51) Int. Cl.: B65D 85/804

(54) **CAPSULE WITH ANTI-DRIP DEVICE**
KAPSEL MIT ANTI-TROPFVORRICHTUNG
CAPSULE AVEC DISPOSITIF ANTI-GOUTTE

(30) Priority: 22.09.2015 EP 15186239
(43) Date of publication of application: 01.08.2018
(73) Proprietor: Société des Produits Nestlé S.A., 1800 Vevey (CH)
(72) Inventor: HEYDEL, Christophe Sébastien Paul, 2025 Chez-Le-Bart (CH); DUBESSET, Claire, 1135 Denens (CH); TALON, Christian, 1134 Vufflens-le-Château (CH)
(86) International application number: PCT/EP2016/072272
(87) International publication number: WO 2017/050745

(56) References cited:
- WO-A1-2008/116818
- WO-A1-2010/112353
- WO-A1-2014/037339
- WO-A1-2014/053638
- WO-A2-2009/006374

## Description

### Field of the invention

The present invention concerns a capsule for the preparation of a beverage, comprising a means for preventing the dripping of said liquid foodstuff from said capsule.

### Background of the invention

In the food and beverage arts, for example in WO 2014/053638 A1, it is well known to prepare beverages by the use of single-serving capsules, along with corresponding beverage extraction machines configured to prepare a portion of a beverage from a portion of a beverage ingredient contained within said capsules.

The beverage extraction process comprises several steps. Once the beverage capsule is properly seated in the extraction machine, the seal of the capsule (if any) is broken and a volume of heated water is introduced into the capsule through a first opening provided or created for that purpose, such as by a needle or similar arrangement. Notably, during the preparation of certain beverages such as espresso coffee, the water may be injected into the capsule under pressure.

The water, once introduced into the capsule, mixes with the beverage ingredient to create a beverage, which is subsequently dispensed through a second opening in the capsule provided or created for this purpose..

In this way, a single-serving portion of a beverage is quickly and easily prepared.

However, such systems are disadvantageous in that, once the beverage preparation process is complete, a small amount of residual water and/or beverage often remains in the capsule. This beverage can tend to leak from the second opening provided for dispensing the beverage, as well as from the first opening through which the water is injected, particularly once the capsule is removed from the extraction machine for disposal. Cleaning up such leakage can inconvenience the user and generally reduce the cleanliness of the beverage preparation system.

There is thus a need for providing a beverage capsule which reduces the occurrence of leaks and dripping after use.

### Summary of the invention

To this end, the invention is directed towards a beverage capsule, comprising a substantially cup-shaped capsule body having an open end and defining a cavity; an injection wall disposed upon said open end so as to enclose said cavity; and a quantity of a beverage ingredient disposed within said cavity.

According to the invention, the capsule further comprises a partition disposed in said cavity, said partition dividing said cavity into a first chamber proximate to said injection wall, and a second chamber in which said quantity of beverage ingredient is disposed; and at least one channel extending from said partition, said at least one channel comprising a first end opening into said first chamber at the level of the partition, and a second end opening into said second chamber at a predetermined distance from said partition.

Such a capsule is advantageous in that, as the second end of the channel is offset from the partition, a space will be created in the region of the second cavity proximate to the partition, wherein a region of low pressure is created at the end of the preparation of a beverage. As a result, a residual volume of beverage is retained within the capsule by this low-pressure region, preventing dripping and spilling of beverage from the spent beverage capsule.

In a possible embodiment, the at least one channel is constituted by a tube.

Preferably, the at least one channel is formed integrally with the partition.

This is advantageous in that a channel and partition so configured can be easily and quickly produced. In addition, once the partition is fabricated, (whether as one piece or assembled from separate components), it can be inserted into the capsule during the capsule fabrication/assembly process with no further manipulation or adjustment necessary, making it conducive to high-speed, high-volume production of beverage capsules.

In a possible embodiment, the injection wall comprises a membrane adapted to be pierced by an injection needle of a beverage-preparation machine.

This is advantageous in that the beverage capsule can be employed in the beverage-production machines presently commercialized which employ such injection needles, without any need to adapt or modify said machines. The advantages of the capsule can therefore be enjoyed immediately by the user, without obligating him/her to procure a new beverage-production machine or reconfigure an existing one.

In another possible embodiment, the injection wall comprises an inlet port configured to cooperate with a beverage-preparation machine.

A capsule so configured is advantageous, in that such an injection port may permit greater water injection pressures than would otherwise be possible with an injection needle piercing a membrane. As a result of this increased injection pressure, the advantages of the invention may be realised in the production of a wider range of beverages.

In one possible embodiment of the beverage capsule, there is provided a single channel.

Alternatively, there is provided a plurality of channels.

By adapting the number of channels extending between the first and second chambers, the pressure and flow rate of the liquid being injected into the capsule during the preparation of the beverage can be tightly controlled.

More particularly, the pressure and flow rate can be controlled to produce a beverage of maximal quality, without foregoing the advantages of the invention presented above.

### Brief description of the drawings

Additional features and advantages of the present invention are described in, and will be apparent from, the description of the presently preferred embodiments which are set out below with reference to the drawings in which:
**Figure 1** is a cross-section of a beverage capsule according to the invention, prior to the injection of a volume of water during a beverage-preparation process;
**Figure 2** is a cross-section of the beverage capsule of Figure 1, during the injection of said volume of water; and
**Figure 3** is a cross-section of the beverage capsule of Figure 1, after the injection of said volume of water.

### Detailed description of the invention

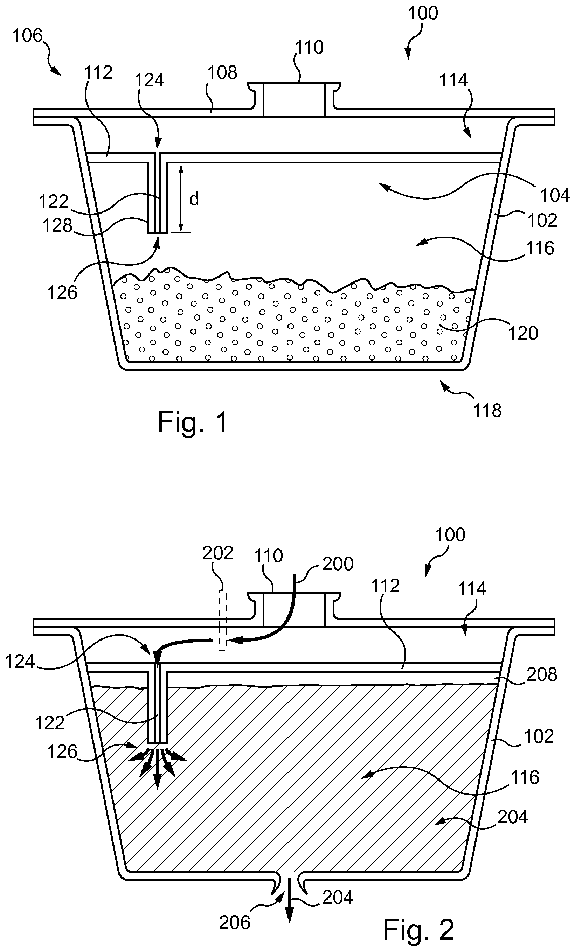

In Figure 1, there is depicted a beverage capsule 100, which is comprised generally of a capsule body 102. The capsule body 102 defines a cavity 104 which communicates with an open end 106, thereby giving the capsule body 102 a globally cup-shaped aspect.

At the open end 106 is disposed an injection wall 108. The injection wall serves to close off the open end 106 of the capsule, and to permit the injection of a volume of water during a beverage preparation process.

The injection wall 108 may be configured in a number of different ways, depending on the particular configuration of the beverage preparation machine in which the beverage capsule is intended to be used. In the embodiment depicted in Figure 1, there is provided an injection port 110. The injection port 110 is configured to engage with a complementary apparatus (not shown) disposed in a beverage preparation machine which creates a tight, leak-resistant seal and permits the injection of water into the beverage capsule 100 at high pressure.

In alternate embodiments, the injection wall may be provided as a simple membrane, for instance a metallic foil, a plastic sheet, or some combination or lamination thereof. Such an injection wall is suitable for a beverage-preparation machine which employs a hollow needle to pierce the beverage capsule to inject the water.

The beverage capsule 100 further comprises a partition 112. The partition 112 is disposed in the cavity 104, substantially parallel with the open end 106 and the injection wall 108, and serves to divide the cavity 104 into a first chamber 114 and a second chamber 116.

The partition 112 will be a rigid, substantially disc-shaped member that is fabricated from a food-grade material resistant to heat, pressure, acidity, and other such conditions that are generally associated with food preparation. Ideally, the partition 112 is fabricated from the same material as the capsule body 102, though it could also be envisioned to fabricate it from other materials.

The first chamber 114 is disposed proximate to the injection wall 108, while the second chamber 116 is located opposite the first chamber 114, near a closed end 118 of the capsule.

In the second chamber 116, there is disposed a single-serving quantity of a beverage ingredient 120. The quantity of beverage ingredient 120 is formulated and portioned such that, when mixed with heated water, it will be reconstituted into a single portion of a beverage or other such liquid or semi-liquid foodstuff. For instance, the quantity of beverage ingredient 120 might comprise ground coffee, instant coffee, dried tea leaves, cocoa powder, powdered milk, sugar, freeze-dried broth, or any combination of these and/or other ingredients as desired.

The first chamber 114 and the second chamber 116 of the beverage capsule 100 are put in fluid communication by a channel 122, which has a first end 124 opening on the first chamber 114, and a second end 126 opening on the second chamber 116.

The channel is here provided in the form of a tube 128, which is formed integrally with the partition 112 and extends into the second chamber 116. As a result, the second end 126 of the channel 122 opens into the second chamber 116 at a distance *d* from the partition 112.

It will be noted that, in other embodiments of the invention, the channel may be provided in a different form. The person of skill in the art will be readily able to determine which is most appropriate for the application at hand.

For instance, rather than a tube formed as a part of a partition, there may be a tube that is provided separately from the partition and fitted to it during the assembly of the capsule. This can be particularly advantageous when one capsule design is employed to make capsules containing several different kinds of beverages, in that the dimensions of the channel can be adapted for each beverage with a minimum of adaptation.

Likewise, it may be preferable to provide several channels, rather than a single one. This may be advantageous where it is necessary to spread the flow of the stream of heated water evenly throughout the volume of the beverage capsule.

Turning now to Figure 2, the beverage capsule 100 is disposed in the beverage preparation machine (not depicted), which injects a stream of heated water 200 through the injection port 110 and into the first chamber 114.

However, as mentioned above the beverage capsule may alternatively be configured such that the injection of heated water 200 is achieved by the use of a hollow needle 202 (depicted here in dashed lines for reference).

If the use of a hollow needle 202 is envisioned, it will be understood that the first chamber 114 is at least deep enough to accommodate the needle; otherwise, the first chamber 114 need only be deep enough to keep from overly restricting the flow of the heated water 200.

As the heated water 200 is injected into the first chamber 114, it will flow through the channel 122, from the first end 124 to the second end 126 and into the second chamber 116. The heated water 200 then mixes with the quantity beverage ingredient to create a beverage 204, which is dispensed through a drain 206.

Ideally, the dimensions (*e.g.* the length and diameter) of the channel 122 are chosen such that the restriction on the flow of the heated water 200 created by the channel 122 is appropriate for the type and volume of the particular beverage being prepared. In the same vein, it may in certain embodiments be desirable to provide a plurality of channels, which may permit increased flow rates relative to a single channel 122 as depicted in Figures 1-3. The person of ordinary skill in the art will be readily capable of determining the optimal number and configuration of the channel(s) in any particular embodiment.

The drain 206 may be provided in a number of different forms, for instance a frangible wall which opens under increased pressure within the beverage capsule 100, as shown here. Alternatively, an opening in the capsule body 102 may be created upon the insertion of the beverage capsule 100 into the beverage preparation machine. In any event, the drain 206 will be dimensioned so as to allow for an acceptable flow rate of the beverage 204 from the beverage capsule 100.

As a result of the injection of the heated water 200, and the flow restriction imposed by the drain 206, the second chamber 116 will rapidly fill with the beverage 204. The air present in the second cavity 114 prior to the injection step will thus form an air pocket 208, near the partition 112.

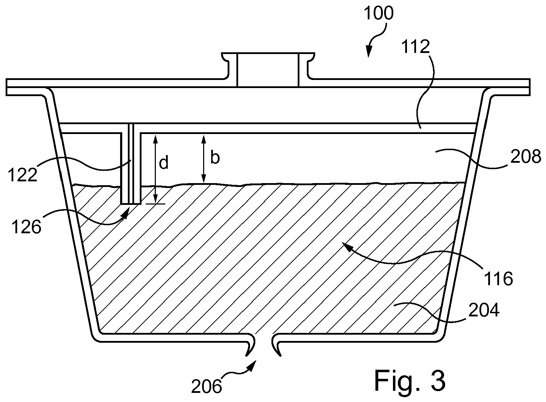

Once the injection of water is complete, the beverage capsule 100 will appear substantially as depicted in Figure 3.

Initially (during the first three seconds following the cessation of injection) the pressure within the beverage capsule 100 will drop dramatically. This will force a last small amount of the beverage 204 out through the drain 206. This is not a problem, as at this point the container into which the beverage 204 was dispensed is still positioned underneath the drain 206 and will catch these final few millilitres of beverage 204.

This causes the level of the volume of beverage 204 within the second chamber 116 to drop slightly, causing the air pocket 208 to decrease in pressure. Once the pressure of the air pocket 208 reaches equilibrium with the atmospheric pressure and the weight of the beverage 204 remaining in the beverage capsule 100, the remaining beverage 204 will cease flowing from the drain 206 and be retained within the second chamber 116. Further dripping of the beverage 204 from the beverage capsule 100 is thus prevented.

At this point, the user may remove the beverage capsule 100 from the beverage production machine and dispose of it; the remaining beverage 204 will not leak from the capsule.

It is important to note that the distance *b*, which is the distance between the level of the beverage 204 after the completion of the injecting step, must be less than the distance *d* of between the partition 112 and the second end 126 of the channel 122. In other words, the level of the beverage must never drop beyond the second end 126 of the channel 122.

Otherwise, the air pocket 208 will be vented to atmosphere, and the remaining volume of beverage 204 will drain from the beverage capsule 100. Of course, the person of ordinary skill in the art will be able to configure the beverage capsule, including dimensions such as the channel length and diameter, to avoid this eventuality.

## Claims

1. A beverage capsule (100), comprising:
- a substantially cup-shaped capsule body (102) having an open end (106) and defining a cavity (104);
- an injection wall (108) disposed upon said open end (106) so as to enclose said cavity (104); and
- a quantity of a beverage ingredient (120) disposed within said cavity (104);
- a partition (112) disposed in said cavity (104), said partition (112) dividing said cavity (104) into a first chamber (114) proximate to said injection wall, and a second chamber (116) in which said quantity of beverage ingredient (120) is disposed; and **characterized in that** the capsule further comprises
- at least one channel (122) extending from said partition (112), said at least one channel (122) comprising a first end (124) opening into said first chamber (114) at the level of the partition (112), and a second end (126) opening into said second chamber (116) at a predetermined distance from said partition (112).

2. The beverage capsule (100) according to claim 1, wherein the at least one channel (122) is constituted by a tube.

3. The beverage capsule (100) according to either claim 1 or claim 2, wherein the at least one channel (122) is formed integrally with the partition (112).

4. The beverage capsule (100) according to any one of the preceding claims, wherein the injection wall (108) comprises a membrane adapted to be pierced by an injection needle (202) of a beverage-preparation machine.

5. The beverage capsule (100) according to any one of claims 1 to 4, wherein the injection wall (108) comprises an inlet port (110) configured to cooperate with a beverage-preparation machine.

6. The beverage capsule (100) according to any one of the preceding claims, wherein there is provided a single channel (122).

7. The beverage capsule according to any one of claims 1 to 5, wherein there is provided a plurality of channels.

## Patentansprüche

1. Getränkekapsel (100), umfassend:
- einen im Wesentlichen becherförmigen Kapselkörper (102) mit einem offenen Ende (106), der einen Hohlraum (104) definiert;
- eine Injektionswand (108), die an dem offenen Ende (106) angeordnet ist, sodass sie den Hohlraum (104) umschließt; und
- eine Menge eines Getränke-Inhaltsstoffs (120), der in dem Hohlraum (104) angeordnet ist;
- eine Trennwand (112), die in dem Hohlraum (104) angeordnet ist, wobei die Trennwand (112) den Hohlraum (104) in eine erste Kammer (114) nahe der Injektionswand und eine zweite Kammer (116) unterteilt, in der die Menge des Getränke-Inhaltsstoffs (120) angeordnet ist; und **dadurch gekennzeichnet, dass** die Kapsel ferner umfasst
- mindestens einen Kanal (122), der sich von der Trennwand (112) erstreckt, wobei der mindestens eine Kanal (122) ein erstes Ende (124), das sich auf Höhe der Trennwand (112) in die erste Kammer (114) öffnet, und ein zweites Ende (126) umfasst, das sich in die zweite Kammer (116) in einem vorbestimmten Abstand von der Trennwand (112) öffnet.

2. Getränkekapsel (100) nach Anspruch 1, wobei der mindestens eine Kanal (122) aus einem Rohr besteht.

3. Getränkekapsel (100) nach Anspruch 1 oder Anspruch 2, wobei der mindestens eine Kanal (122) integral mit der Trennwand (112) ausgebildet ist.

4. Getränkekapsel (100) nach einem der vorhergehenden Ansprüche, wobei die Injektionswand (108) eine Membran umfasst, die von einer Injektionsnadel (202) einer Getränkezubereitungsmaschine durchbohrt werden kann.

5. Getränkekapsel (100) nach einem der Ansprüche 1 bis 4, wobei die Injektionswand (108) eine Einlassöffnung (110) umfasst, die ausgelegt ist, um mit einer Getränkezubereitungsmaschine zusammenzuarbeiten.

6. Getränkekapsel (100) nach einem der vorhergehenden Ansprüche, wobei ein einzelner Kanal (122) vorgesehen ist.

7. Getränkekapsel nach einem der Ansprüche 1 bis 5, wobei eine Vielzahl von Kanälen vorgesehen ist.

## Revendications

1. Capsule de boisson (100), comprenant :
- un corps de capsule sensiblement en forme de coupelle (102) ayant une extrémité ouverte (106) et définissant une cavité (104) ;
- une paroi d'injection (108) disposée sur ladite extrémité ouverte (106) de façon à entourer ladite cavité (104) ; et
- une quantité d'un ingrédient de boisson (120) disposé à l'intérieur de ladite cavité (104) ;
- une cloison (112) disposée dans ladite cavité (104), ladite cloison (112) divisant ladite cavité (104) en une première chambre (114) proche de ladite paroi d'injection et une seconde chambre (116) dans laquelle ladite quantité d'ingrédient de boisson (120) est disposée ; et **caractérisée en ce que** la capsule comprend en outre
- au moins un canal (122) s'étendant à partir de ladite cloison (112), ledit au moins un canal (122) comprenant une première extrémité (124) s'ouvrant dans ladite première chambre (114) au niveau de la cloison (112) et une seconde extrémité (126) s'ouvrant dans ladite deuxième chambre (116) à une distance prédéterminée de ladite cloison (112).

2. Capsule de boisson (100) selon la revendication 1, dans laquelle le au moins un canal (122) est constitué par un tube.

3. Capsule de boisson (100) selon la revendication 1 ou la revendication 2, dans laquelle le au moins un canal (122) est formé d'un seul tenant avec la cloison (112).

4. Capsule de boisson (100) selon l'une quelconque des revendications précédentes, dans laquelle la paroi d'injection (108) comprend une membrane conçue pour être percée par une aiguille d'injection (202) d'une machine de préparation de boisson.

5. Capsule de boisson (100) selon l'une quelconque des revendications 1 à 4, dans laquelle la paroi d'injection (108) comprend un orifice d'entrée (110) configuré pour coopérer avec une machine de préparation de boisson.

6. Capsule de boisson (100) selon l'une quelconque des revendications précédentes, dans laquelle il est prévu un seul canal (122).

7. Capsule de boisson selon l'une quelconque des revendications 1 à 5, dans laquelle il est prévu une pluralité de canaux.
